# EUROPEAN PATENT APPLICATION

(11) **EP 4 104 995 A1**
(43) Date of publication of application: **21.12.2022**
(21) Application number: 22179728.5
(22) Date of filing: 17.06.2022
(51) Int. Cl.: B29C 33/12, B29C 33/48, C04B 35/83, B28B 11/00

(54) **WEDGE AND PLUG TOOLING FOR PRE-CARBONIZATION COMPRESSION OF OXIDIZED PAN FIBER PREFORM**

(30) Priority: 18.06.2021 US 202163212264 P; 03.06.2022 US 202217832403
(71) Applicant: Goodrich Corporation, Charlotte, NC 28217-4578 (US)
(72) Inventor: LINCK, John, Pueblo, CO (US); KOROLY, Christopher Charles, Spring Valley, CA (US); WAUGH, Katherine E., Easton, CT (US); NEWTON, Kirk Christopher, Vail, AZ (US); PUJAR, Vijay V., San Diego, CA (US)
(74) Representative: Dehns

(57) **Abstract**

A shape forming tool for pre-carbonization compression of a fibrous preform is provided, comprising a female forming tool (122, 922), a first plug (126, 626), a second plug (128, 628), and a wedge, each configured to be received by a die recess of the female forming tool (122, 922). A first tapered surface of the wedge is configured to engage the first plug (126, 626) and the second tapered surface of the wedge is configured to engage the second plug (128, 628). In response to the first tapered surface of the wedge engaging the first plug (126, 626) and the second tapered surface of the wedge engaging the second plug (128, 628), the first plug (126, 626) and the second plug (128, 628), respectively, are configured to move laterally towards opposing sides of the female forming tool (122, 922) and/or vertically toward a bottom side of the female forming tool (122, 922) to compress the fibrous preform into a shaped body.

## Description

### CROSS REFERENCE TO RELATED APPLICATIONS

This application claims priority to, and the benefit of, U.S. Provisional Patent Application Serial No. 63/212,264, entitled "SHAPE FORMING NON-WOVEN OPF PREFORM," filed on June 18, 2021.

### FIELD

The present disclosure relates to carbon/carbon composites, and more specifically, to systems and methods for manufacturing carbon/carbon (C/C) composites.

### BACKGROUND

Composite bodies are utilized in various industries, including the aerospace industry. C/C composites are often produced as 2D structures, for example utilizing planar oxidized polyacrylonitrile (PAN) fiber-based preforms followed by carbonization and chemical vapor infiltration (CVI) densification.

### SUMMARY

According to various embodiments, a shape forming tool is disclosed, comprising a female forming tool, a first plug; a second plug, and a wedge. The female forming tool comprises a die recess, the female forming tool extends longitudinally along a longitudinal centerline of the female forming tool between and to a first end of the female forming tool and a second end of the female forming tool, and the female forming tool extends laterally between and to a first side of the female forming tool and a second side of the female forming tool. The first plug, the second plug, and the wedge are configured to be received by the die recess. The wedge is configured to be received by the die recess between the first plug and the second plug. The wedge extends longitudinally along a longitudinal centerline of the wedge between and to a first end of the wedge and a second end of the wedge. The wedge extends laterally between and to a first side of the wedge and a second side of the wedge. The first side of the wedge comprises a first tapered surface and the second side of the wedge comprises a second tapered surface. The first tapered surface of the wedge is configured to engage the first plug and the second tapered surface of the wedge is configured to engage the second plug. In response to the first tapered surface of the wedge engaging the first plug, the first plug is configured to move laterally toward the first side of the female forming tool. In response to the second tapered surface of the wedge engaging the second plug, the second plug is configured to move laterally toward the second side of the female forming tool.

In various embodiments, the female forming tool extends vertically between and to a bottom side of the female forming tool and a top side of the female forming tool.

In various embodiments, the die recess extends vertically into the female forming tool from a first top surface and a second top surface of the female forming tool to a recess surface of the female forming tool, wherein the first top surface and the second top surface are arranged on opposing sides of the recess surface at the top side of the female forming tool. The die recess extends longitudinally in the female forming tool between and to the first end of the female forming tool and the second end of the female forming tool. The die recess extends laterally in the female forming tool between the first side of the female forming tool and the second side of the female forming tool.

In various embodiments, the die recess extends into the female forming tool from a first top surface and a second top surface of the female forming tool to a recess surface of the female forming tool, wherein the recess surface comprises a radii surface forming a rounded, convex surface transition disposed between a sidewall portion of the recess surface and the first top surface of the female forming tool.

In various embodiments, the die recess is configured without any sharp corners or sharp transitions.

In various embodiments, the shape forming tool further comprises a caul plate configured to be disposed between the fibrous preform and at least one of the wedge, the first plug, and the second plug. The caul plate is configured to distribute a force between the wedge, the first plug, and/or the second plug and the fibrous preform during a pre-carbonization compression step.

In various embodiments, the first plug comprises a first angled surface configured to engage the first tapered surface of the wedge, and the second plug comprises a second angled surface configured to engage the second tapered surface of the wedge.

In various embodiments, the first tapered surface comprises a guide flange protruding therefrom, and the first angled surface comprises a guide slot configured to receive the guide flange for maintaining a longitudinal position and a rotational position of the first plug with respect to the wedge.

In various embodiments, the guide flange is disposed entirely within a laterally outermost boundary of the wedge.

In various embodiments, at least one of the wedge, the first plug, or the second plug comprises a threaded aperture at top side thereof for receiving a lifting apparatus whereby at least one of the wedge, the first plug, or the second plug is moved.

According to various embodiments, a shape forming tool is disclosed, comprising a female forming tool comprising a die recess, a first plug configured to be received by the die recess, a second plug configured to be received by the die recess, and a wedge configured to be received by the die recess between the first plug and the second plug. The wedge extends longitudinally along a longitudinal centerline of the wedge between and to a first end of the wedge and a second end of the wedge. The wedge extends laterally between and to a first side of the wedge and a second side of the wedge. The first side of the wedge comprises a first tapered surface and the second side of the wedge comprises a second tapered surface. The first tapered surface of the wedge is configured to engage the first plug and the second tapered surface of the wedge is configured to engage the second plug. In response to the first tapered surface of the wedge engaging the first plug, the first plug is configured to move vertically toward a bottom side of the female forming tool. In response to the second tapered surface of the wedge engaging the second plug, the second plug is configured to move vertically toward the bottom side of the female forming tool.

In various embodiments, in response to the first tapered surface of the wedge engaging the first plug, the first plug is configured to move laterally toward a first side of the female forming tool. In response to the second tapered surface of the wedge engaging the second plug, the second plug is configured to move laterally toward a second side of the female forming tool.

In various embodiments, a total height of the wedge, measured along a vertical direction, is equal to that of the first plug and the second plug.

According to various embodiments, a method for manufacturing a C/C part is disclosed, the method comprising positioning an oxidized PAN fiber preform with a female forming tool, the female forming tool comprising a die recess, and forming the oxidized PAN fiber preform into a shaped body. The forming comprises moving a first plug at least partially into the die recess, the oxidized PAN fiber preform disposed between the first plug and the female forming tool, moving a second plug at least partially into the die recess, the oxidized PAN fiber preform disposed between the second plug and the female forming tool, and moving a wedge between and against the first plug and the second plug along a first axis. In response to the wedge pressing between and against the first plug and the second plug, the first plug and the second plug move in opposite directions along a second axis substantially perpendicular to the first axis. In response to moving the first plug and the second plug along the second axis, the oxidized PAN fiber preform is compressed between the first plug and the female forming tool and between the second plug and the female forming tool.

In various embodiments, movement of the wedge along the first axis further causes the first plug and the second plug to move parallel to the first axis.

In various embodiments, in response to the wedge moving along the first axis, compressing the oxidized PAN fiber preform between the wedge and the female forming tool.

In various embodiments, the first plug and the second plug are in direct contact with the oxidized PAN fiber preform when the wedge is pressed between and against the first plug and the second plug.

In various embodiments, the method further comprises gripping the oxidized PAN fiber preform with a gripper plate, wherein a lateral end of the oxidized PAN fiber preform is held between the gripper plate and a clamping surface of the female forming tool.

In various embodiments, a first layer of the oxidized PAN fiber preform is held by the gripper plate and a second layer of the oxidized PAN fiber preform is slidable against the clamping surface of the female forming tool.

In various embodiments, the method further comprises applying water to the oxidized PAN fiber preform prior to the oxidized PAN fiber preform being formed into the shaped body.

In various embodiments, the method further comprises applying heat to the oxidized PAN fiber preform for a predetermined duration while the oxidized PAN fiber preform is held in compression in the die recess.

In various embodiments, the method further comprises moving the shaped body into a graphite fixture, performing a carbonization process on the shaped body, and depositing carbon on and within the shaped body via a chemical vapor infiltration process while the shaped body is secured in the graphite fixture.

The foregoing features and elements may be combined in various combinations without exclusivity, unless expressly indicated herein otherwise. These features and elements as well as the operation of the disclosed embodiments will become more apparent in light of the following description and accompanying drawings.

### BRIEF DESCRIPTION OF THE DRAWINGS

FIG. 1A is a schematic sectional illustration of a shape forming system for pre-carbonization compression and shaping a fibrous preform into a shaped body with its wedge applying compression forces to its first and second plugs (in a closed or partially closed position), in accordance with various embodiments;
FIG. 1B is a schematic sectional illustration of the system of FIG. 1A with its wedge moved so that its top surface is flush with that of the first and second plugs (in a closed position), in accordance with various embodiments;
FIG. 2 is a perspective illustration of a wedge, in accordance with various embodiments;
FIG. 3 is a perspective illustration of a plug, in accordance with various embodiments;
FIG. 4 is a perspective illustration of a female forming tool (a female die), in accordance with various embodiments;
FIG. 5 is a schematic sectional view of the shape forming system with its wedge and plugs in an open position, in accordance with various embodiments;
FIG. 6A is a schematic sectional view of the shape forming system with its gripper plates in a closed position, in accordance with various embodiments;
FIG. 6B is a schematic sectional view of a gripper plate having protrusions in a closed position, in accordance with various embodiments;
FIG. 7 is a perspective illustration of a wedge having guide bosses, in accordance with various embodiments;
FIG. 8 is a perspective illustration of a plug having guide slots, in accordance with various embodiments;
FIG. 9 is a schematic sectional illustration of a wedge having guide bosses disposed within the outermost periphery or boundary of the wedge, in accordance with various embodiments;
FIG. 10A and FIG. 10B are perspective illustrations opposing ends of a shape forming system having a wedge having wedge sub-units, a first plug having first plug sub-units, and a second plug having second plug sub-units, in accordance with various embodiments;

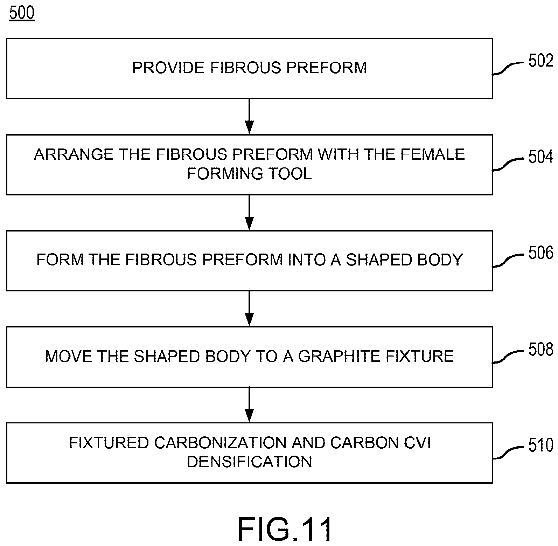

FIG. 11 is a flow diagram of a method for forming a preform into shaped body;
FIG. 12 is a schematic sectional illustration of a graphite fixture for securing the shaped body formed by the shape forming system of FIG. 1A during a carbonization and/or densification process, in accordance with various embodiments;
FIG. 13 is a schematic sectional illustration of a shape forming system for pre-carbonization compression and shaping a fibrous preform into a shaped body with a caul plate disposed between the male dies and the fibrous preform, in accordance with various embodiments;
FIG. 14 is a schematic sectional illustration of a shape forming system for pre-carbonization compression and shaping a fibrous preform into a shaped body, in accordance with various embodiments;
FIG. 15A, FIG. 15B, and FIG. 15C are perspective, top, and side illustrations of a shape forming system for pre-carbonization compression and shaping a fibrous preform into a shaped body, in accordance with various embodiments;
FIG. 16 is a perspective illustration of a plug (the first plug or the second plug) of FIG. 15A, in accordance with various embodiments;
FIG. 17 is a perspective illustration of the wedge of FIG. 15A, in accordance with various embodiments; and
FIG. 18 is a perspective, isolated, section illustration of the first plug, the second plug, and the wedge of FIG. 15A in an aligned and closed position, in accordance with various embodiments.

### DETAILED DESCRIPTION

All ranges and ratio limits disclosed herein may be combined. It is to be understood that unless specifically stated otherwise, references to "a," "an," and/or "the" may include one or more than one and that reference to an item in the singular may also include the item in the plural.

The detailed description of exemplary embodiments herein makes reference to the accompanying drawings, which show exemplary embodiments by way of illustration and its best mode, and not of limitation. While these exemplary embodiments are described in sufficient detail to enable those skilled in the art to practice the invention, it should be understood that other embodiments may be realized and that logical, chemical and mechanical changes may be made without departing from the spirit and scope of the invention. For example, the steps recited in any of the method or process descriptions may be executed in any order and are not necessarily limited to the order presented. Moreover, many of the functions or steps may be outsourced to or performed by one or more third parties. Furthermore, any reference to singular includes plural embodiments, and any reference to more than one component or step may include a singular embodiment or step. Also, any reference to attached, fixed, connected or the like may include permanent, removable, temporary, partial, full and/or any other possible attachment option. Additionally, any reference to without contact (or similar phrases) may also include reduced contact or minimal contact.

As used herein, "fiber volume ratio" means the ratio of the volume of the fibers of the fibrous preform to the total volume of the fibrous preform. For example, a fiber volume ratio of 25% means the volume of the fibers in the fibrous preform is 25% of the total volume of fibrous preform.

As used herein, the term "fiber density" is used with its common technical meaning with units of g/cm³ or g/cc. The fiber density may refer specifically to that of the individual fibers in the fibrous preform. The density will be measured, unless otherwise noted, by taking the weight divided by the geometric volume of each fiber. The density may refer to an average density of a plurality of fibers included in a fibrous preform.

As used herein, "CVI/CVD" may refer to chemical vapor infiltration and/or chemical vapor deposition. Accordingly, CVI/CVD may refer to chemical vapor infiltration or deposition or both.

In general, there are currently two primary methods of manufacturing carbon/carbon ("C/C") materials. The first method involves the layup and cure of a carbon fiber, phenolic resin matrix composite, followed by pyrolysis and subsequent phenolic resin infiltration and pyrolysis cycles. Multiple resin infiltration, cure, and pyrolysis cycles are typically used until the part achieves the desired density. The second method involves fabrication of an oxidized polyacrylonitrile fiber (OPF) or carbon fiber preform, followed by carbonization (for OPF preforms) and chemical vapor infiltration (CVI) densification. The chemical vapor infiltration cycles are continued, in conjunction with machining the preform between infiltration cycles if desired, until the desired part density is achieved. Combinations of these two basic process methods are also in use and may include variations in preform architecture, infiltration resin type, and chemical vapor infiltration conditions. A third method may involve a combination of the two aforementioned processes including layup and cure of a carbon fiber, phenolic resin matrix composite, followed by pyrolysis, and CVI densification.

After a fibrous OPF preform (also referred to herein as a fibrous preform) is made, it is carbonized to convert the OPF into carbon fibers. Typically, fibrous preforms are carbonized by placing the preforms in a furnace with an inert atmosphere. As is well-understood, the heat of the furnace causes a chemical conversion which drives off the non-carbon chemical species from the preform. The resulting preform generally has the same fibrous structure as the fibrous preform before carbonizing. However, the OPF have been converted to 100%, or nearly 100%, carbon. After the preform has been carbonized, the preform is densified. In general, densification involves filling the voids, or pores, of the fibrous preform with additional carbon material. This may be done using the same furnace used for carbonization or a different furnace. Typically, chemical vapor infiltration and deposition ("CVI/CVD") techniques are used to densify the porous fibrous preform with a carbon matrix. This commonly involves heating the furnace and the carbonized preforms, and flowing hydrocarbon gases into the furnace and around and through the fibrous preforms. As a result, carbon from the hydrocarbon gases separates from the gases and is deposited on and within the fibrous preforms. When the densification step is completed, the resulting C/C part has a carbon fiber structure with a carbon matrix infiltrating the fiber structure, thereby deriving the name "carbon/carbon".

C/C parts of the present disclosure are formed using OPF fabrics that are shape-formed prior to carbonization. C/C parts of the present disclosure may be formed using multi-axial, non-crimp, stitch-bonded, OPF fabrics that are shape-formed prior to carbonization. C/C parts of the present disclosure may be particularly useful for high temperature aerospace applications, such as for re-entry vehicle applications or other high temperature applications such as where a hot gas impinges on the vehicle after being rapidly compressed and heated as a result of a high pressure bow shock in front of the vehicle. C/C parts of the present disclosure may be especially useful in these applications because of the superior high temperature characteristics of C/C material. In particular, the carbon/carbon material used in C/C parts is a good conductor of heat and is able to dissipate heat generated during high temperature conditions. Carbon/carbon material is also highly resistant to heat damage, and thus, may be capable of sustaining forces during severe conditions without mechanical failure.

Application of OPF-based carbon-carbon composites has been generally limited to simple flat structures including C/C aircraft brake disks. C/C components including leading edges, structural members and other contour-shape carbon composites are often produced as 2D structures (i.e., flat, planar components); however, these materials tend to maintain low interlaminar properties. A shape formed 3D C/C part offers opportunity for similar in-plane C/C properties with higher interlaminar properties than 2D C/C.

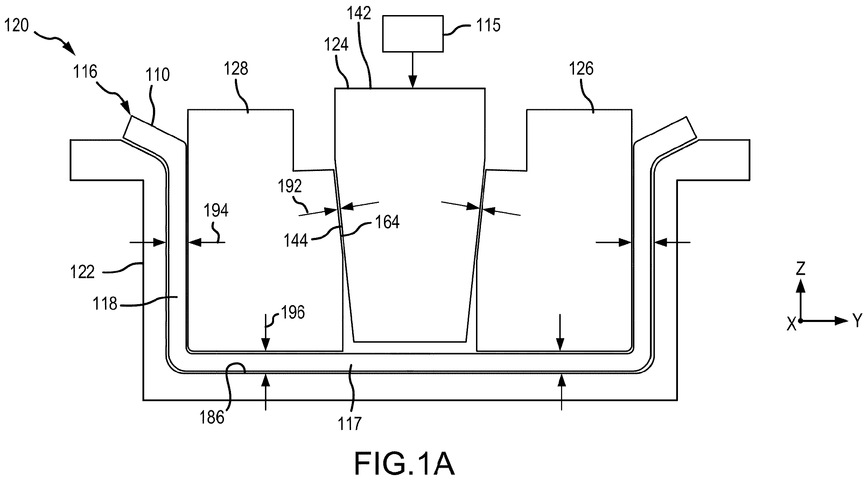

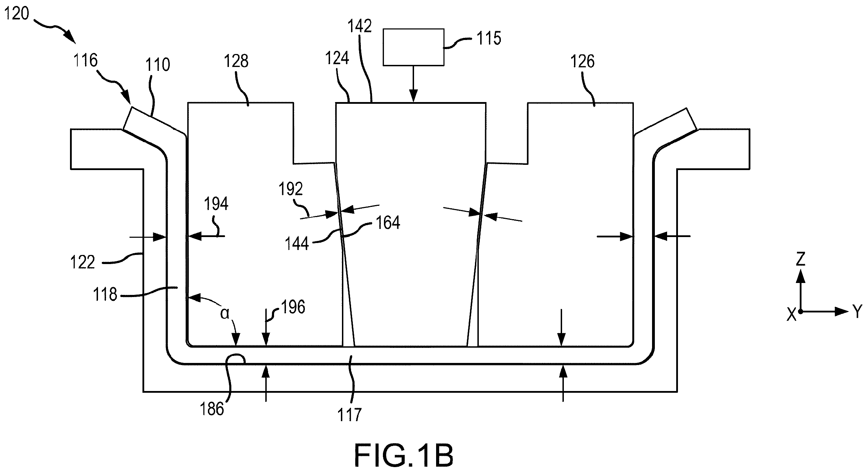

With reference to FIG. 1A and FIG. 1B, a shape forming tool 120 for pre-carbonization compression and shaping a fibrous preform 110 is illustrated, in accordance with various embodiments. Shape-forming tool 120 may be configured as a matched die forming tool. Shape forming tool 120 may be configured for forming a shaped fibrous preform 110 from a multi-layered preform; e.g., a stack of a plurality of layers of material. Shape forming tool 120 may include a multi-component wedge-based press fixture comprising a female forming tool 122 and a multi-piece wedge and plug arrangement comprising a wedge 124, a first plug 126, and a second plug 128. This wedge-and-plug tooling design allows the shape forming tool 120 to have enough flexibility to maintain pressure application on the side walls of the fibrous preform 110 as the thickness of the material decreases during the pre-carbonization compression process. In various embodiments, as described in greater detail herein, the design may utilize angled flanges to keep the wedges and plugs aligned together as the tooling pushes down on the fibrous preform 110 and into the female forming tool 122. In various embodiments, female forming tool 122, wedge 124, first plug 126, and second plug 128 are made from a metal material.

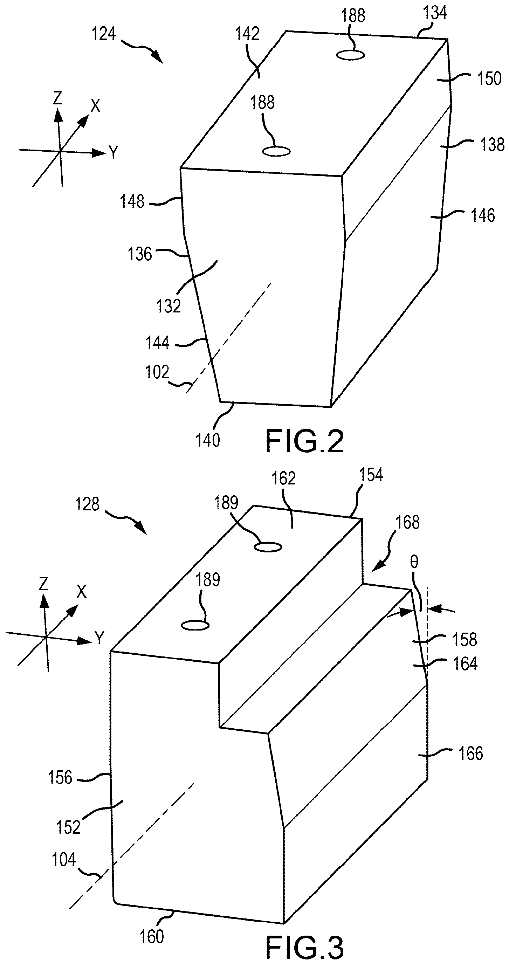

With reference to FIG. 2, the wedge 124 extends longitudinally along a longitudinal centerline 102 of the wedge 124 (e.g., along an X-axis) between and to a first end 132 of the wedge 124 and a second end 134 of the wedge 124. The wedge 124 extends laterally (e.g., along a Y-axis) between and to a first side 136 of the wedge 124 and a second side 138 of the wedge 124. The wedge 124 extends vertically (e.g., along a Z-axis) between and to a bottom side 140 of the wedge 124 and a top side 142 of the wedge 124.

The wedge 124 is configured with a wedge-shaped geometry; e.g., the first side 136 comprises a first angled surface 144 (also referred to herein as a first tapered surface) and the second side 138 comprises a second angled surface 146 (also referred to herein as a second tapered surface) such that the wedge 124 is tapered toward the bottom side 140. In various embodiments, the first side 136 further comprises a first vertical surface 148 and the second side 138 comprises a second vertical surface 150 such that the wedge 124. The first angled surface 144 may intersect with the first vertical surface 148 at a horizontally extending (e.g., along the X-axis) interface. The second angled surface 146 may intersect with the second vertical surface 150 at a horizontally extending (e.g., along the X-axis) interface.

With reference to FIG. 3, the second plug 128 extends longitudinally along a longitudinal centerline 104 of the second plug 128 (e.g., along an X-axis) between and to a first end 152 of the wedge 124 and a second end 154 of the second plug 128. The second plug 128 extends laterally (e.g., along a Y-axis) between and to a first side 156 of the second plug 128 and a second side 158 of the second plug 128. The second plug 128 extends vertically (e.g., along a Z-axis) between and to a bottom side 160 of the second plug 128 and a top side 162 of the second plug 128.

In various embodiments, the first side 156 is shaped to conform to a geometry of a side surface of the female forming tool 122. In various embodiments, the first side 156 comprises a vertical surface. However, first side 156 may be at an angle with respect to a vertical direction depending on the desired shape of the final C/C part. The second side 158 may comprise an angled surface 164 configured to engage (e.g., directly contact) first angled surface 144 whereby preform compressing forces (represented by arrows 192 in FIG. 1A)-e.g., in response to wedge 124 moving downward (e.g., in the negative Z-direction)-are transmitted therebetween for moving the second plug 128 in the lateral direction (e.g., along the Y-axis) to compress (e.g., see compression forces represented by arrows 194 in FIG. 1A) a sidewall 118 of the fibrous preform 110. The preform compressing force 192 transmitted between wedge 124 and second plug 128 may further move the second plug 128 in the vertical direction (e.g., in the negative Z-direction) to compress (e.g., see compression forces represented by arrows 196 in FIG. 1A) a bottom wall 117 of the fibrous preform 110. Angled surface 164 may be oriented at a non-parallel angle θ with respect to the vertical direction (e.g., the Z-direction). In various embodiments, a vertical surface 166 extends vertically between and to bottom side 140 and angled surface 164. In various embodiments, a step 168 is formed into the second plug 128. Step 168 may extend between and to angled surface 164 and top side 162. The first plug 126 may be structurally similar to the second plug 128. The first plug 126 may exhibit a mirrored geometry with that of the second plug 128.

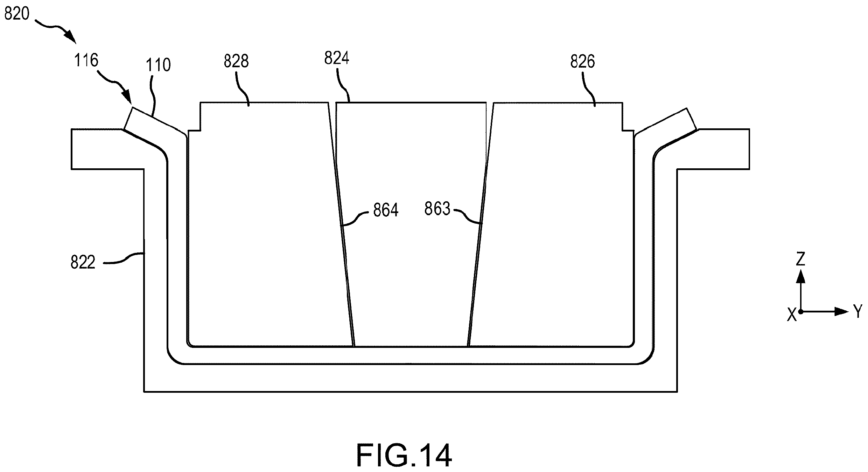

Although illustrated as extending between and to the step 168 and the vertical surface 166, it is further contemplated that angled surface 164 may extend between and to the top side 162 and the bottom side 160 of second plug 128. In this regard, step 168 and vertical surface 166 may be omitted in various embodiments. For example, with momentary reference to FIG. 14, a shape forming tool 820 is illustrated with a female forming tool 822, a wedge 824, a first plug 826, and a second plug 828. The angled surface 863 of the first plug 826 and the angled surface 864 of the second plug 828 extend between and to the top side and the bottom side of first plug 826 and the second plug 828, respectively. The first plug 126 and second plug 128 of FIG. 1A through FIG. 10B may be shaped similar to first plug 826 and second plug 828, respectively, in various embodiments. With respect to FIG. 14, elements with like element numbering, as depicted in FIG. 1A, are intended to be the same and will not necessarily be repeated for the sake of clarity.

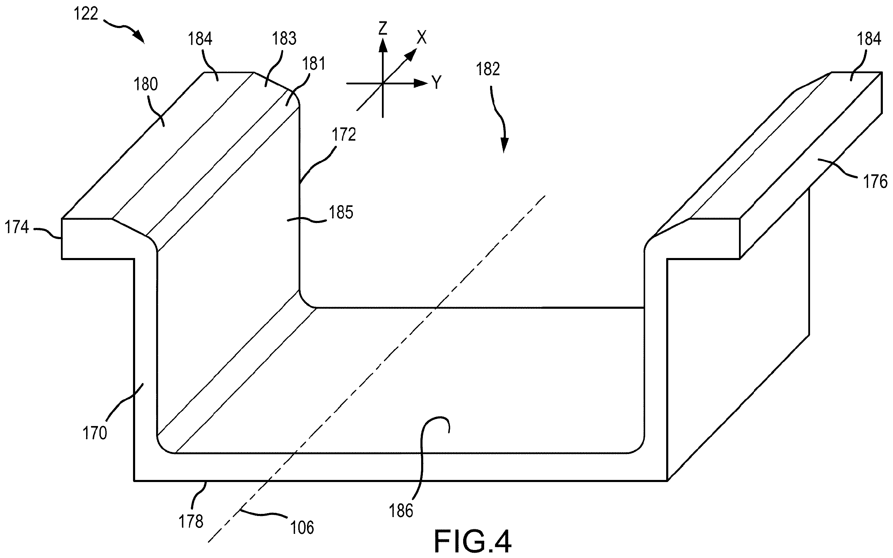

With reference to FIG. 4 the female forming tool 122 extends longitudinally along a longitudinal centerline 106 of the female forming tool 122 (e.g., along X-axis) between and to a first end 170 of the female forming tool 122 and a second end 172 of the female forming tool 122. The female forming tool 122 extends laterally (e.g., along a Y-axis) between and to a first side 174 of the female forming tool 122 and a second side 176 of the female forming tool 122. The female forming tool 122 extends vertically (e.g., along a Z-axis) between and to a bottom side 178 of the female forming tool 122 and a top side 180 of the female forming tool 122.

The female forming tool 122 is configured with at least one die recess 182; e.g., an aperture such as a pocket, a channel, a groove, etc. The die recess 182 of FIG. 4 extends (e.g., partially) vertically into the female forming tool 122 from one or more top surfaces 184 of the female forming tool 122 to a recess surface 186 of the female forming tool 122, where the top surfaces 184 of FIG. 4 are arranged on opposing sides of the recess surface 186 at the female forming tool top side 180. The die recess 182 of FIG. 4 extends longitudinally in (e.g., through) the female forming tool 122, for example, between and to the female forming tool first end 170 and/or the female forming tool second end 172. The die recess 182 of FIG. 4 extends laterally in (e.g., within) the female forming tool 122, for example, between opposing lateral sides of the recess surface 186.

The recess surface 186 is a concave or concave-convex surface and may have a curved geometry; e.g., a three-dimensional (3D) curvature. The recess surface 186 of FIG. 4, for example, has a curved (e.g., arcuate, splined, etc.) cross-sectional geometry in a lateral-vertical reference plane; e.g., a Y-Z plane. The recess surface 186 of FIG. 4 also has a curved (e.g., arcuate, splined, etc.) cross-sectional geometry in a longitudinal-vertical reference plane; e.g., a X-Z plane. This recess curvature may change as the recess surface 186 / the die recess 182 extends laterally and/or longitudinally, which may provide the recess surface 186 with a complex 3D curvature. In embodiments, the recess curvature may remain uniform as the recess surface 186 / the die recess 182 extends laterally and/or longitudinally. The recess surface 186 may be configured without any sharp corners or sharp transitions.

In various embodiments, the recess surface 186 comprises a radii surface 181 which forms a rounded, convex surface transition between a sidewall portion 185 of the recess surface 186 and the female forming tool top surface 184. The fibrous preform may be bent around or over radii surface 625. Radii surface 181 may minimize wrinkling of the fibrous preform 110 during the forming process. Radii surface 181 may extend between and to the female forming tool first end 170 and the female forming tool second end 172. In various embodiments, an angled surface 183 oriented at an angle (e.g., between 5 and 75 degrees) with respect to the female forming tool top surface 184 is disposed between the radii surface 181 and the female forming tool top surface 184. Angled surface 183 may extend between and to the female forming tool first end 170 and the female forming tool second end 172.

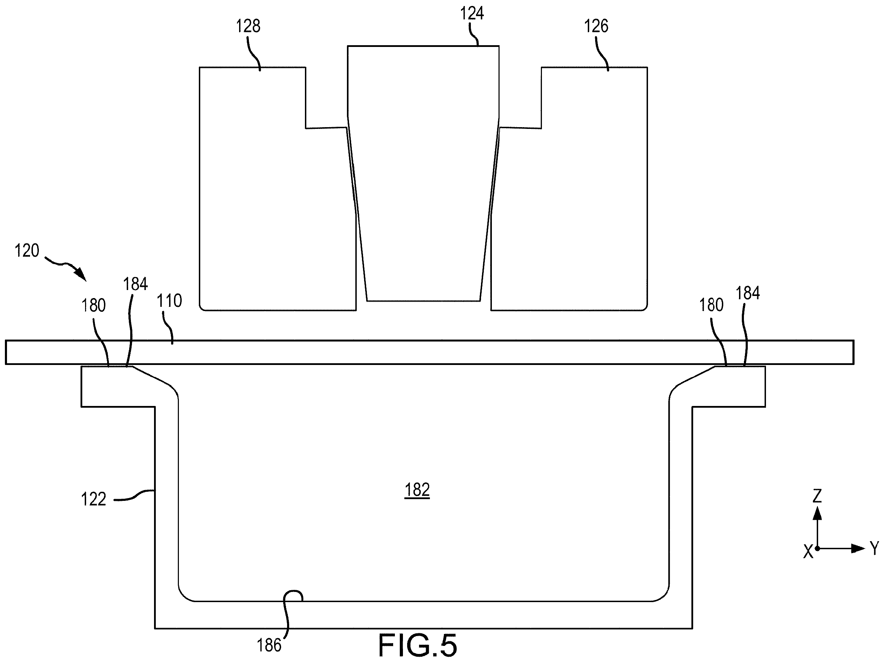

With reference to FIG. 5, the fibrous preform 110 comprises a generally planar preform and may be placed over the female forming tool 122. The wedge 124, first plug 126, and second plug 128 are moveable with respect to the female forming tool 122 to compress the fibrous preform 110 therebetween, thereby shaping and compressing the fibrous preform 110.

Methods for manufacturing a C/C part of the present disclosure include pre-carbonization compression of a fibrous preform 110. Fibrous preform 110 may comprise polyacrylonitrile (PAN) or OPF fibers extending in three directions and leaving a plurality of pores or open spaces and may be prepared for shape-forming, compression, and carbonization. In various embodiments, fibrous preform 110 is formed by stacking layers of PAN or OPF fibers and superimposing the layers (e.g., by stacking sheets of fabric). The layers may be needled perpendicularly to each other (i.e., along the Z-direction) with barbed, textile needles or barbless, structuring needles. In various embodiments, the layers are needled at an angle of between 0° and 60° (e.g., 0°, 30°, 45°, and/or 60°) with respect to the Z-direction to each other. The needling process generates a series of z-fibers through fibrous preform 110 that extend perpendicularly to the fibrous layers. The z-fibers are generated through the action of the needles pushing fibers from within the layer (x-y or in-plane) and reorienting them in the z-direction (through-thickness). Needling of the fibrous preform may be done as one or more layers are added to the stack or may be done after the entire stack of layers is formed. The needles may also penetrate through only a portion of fibrous preform 110, or may penetrate through the entire fibrous preform 110. In addition, resins are added, in various embodiments, to fibrous preform 110 by either injecting the resin into the preform following construction or coating the fibers or layers prior to forming the fibrous preform 110. The needling process may take into account needling parameters optimized to maintain fiber orientation, minimize in-plane fiber damage, and maintain target interlaminar properties.

After needling the fibrous preform 110, the non-woven fibrous preform 110 may be both compressed to higher fiber volume ratio and formed to shape in a single-step shape-forming process (i.e., using the shape forming tool of the present disclosure). It should be understood, moreover, that fibrous preforms 110 not subject to needling prior to pre-carbonization compression are also within the scope of the present disclosure.

After the fibrous preform 110 is placed over the female forming tool 122, the wedge 124, first plug 126, and second plug 128 are placed over the fibrous preform 110 and into the female forming tool 122, thereby beginning the shaping and compressing of the fibrous preform 110 as the fibrous preform is pressed into the female forming tool 122. In various embodiments, the wedge 124 may be first placed into the female forming tool 122 to push the fibrous preform 110 down to the bottom of the recess surface 186. In various embodiments, the fibrous preform 110 may also be first pushed down to the bottom of the recess surface 186 by hand.

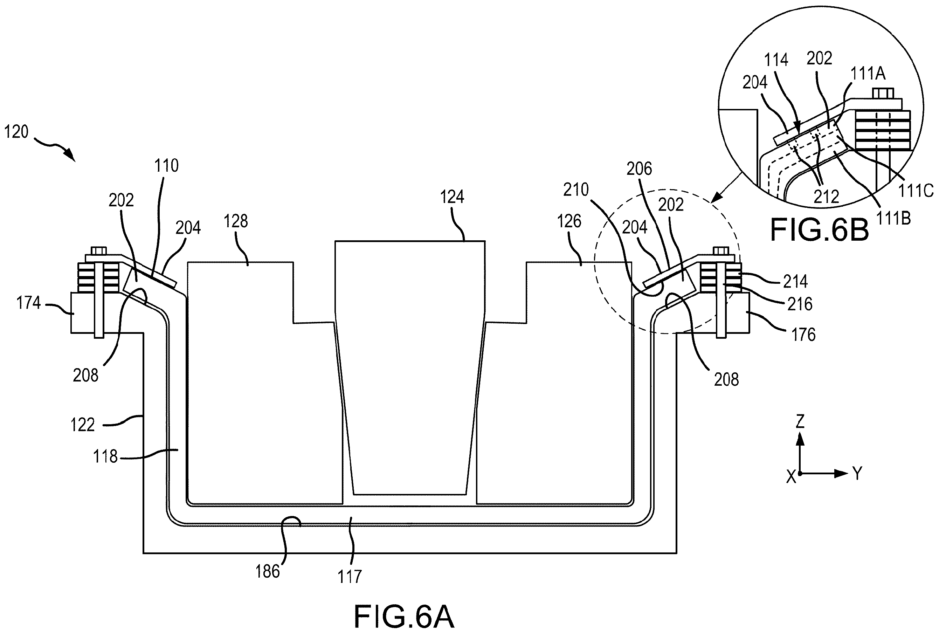

With reference to FIG. 6A, once the fibrous preform 110 is generally pushed down (in the negative Z-direction) in place against the bottom of the recess surface 186 (e.g., by hand or using the wedge 124), the opposing lateral ends 202 of fibrous preform 110 may be clamped to female forming tool 122 using one or more gripper plates 204. The gripper plates 204 may be arranged in one or more arrays disposed along a respective opposing side 174, 176 of the female forming tool 122. In various embodiments, discrete gripper plates 204 are longitudinally spaced from each neighboring (e.g., adjacent) gripper plate 204 in the same gripper plate array. However, in various embodiments, a single gripper plate 204 may extend longitudinally along the side of the female forming tool 122.

Each gripper plate 204 may include a first plate portion 206 oriented substantially parallel with a clamping surface 208 of the female forming tool 122. A grip surface 210 of the gripper plate 204 may be configured to contact the fibrous preform 110. The grip surface 210 may be configured with a relatively high coefficient of static friction and/or kinetic friction, whereas each female forming tool clamping surface 208 may be configured with a relatively low coefficient of static friction and/or kinetic friction. The grip surface 210, for example, may be textured whereas each female forming tool clamping surface 208 may be smooth; e.g., polished. The grip surface 210 may also or alternatively be formed from a material with a higher coefficient of static friction and/or kinetic friction than the material of the female forming tool 122.

The grip surface 210 of FIG. 6A may be aligned with a respective portion of the female forming tool clamping surface 208. The grip surface 210 of FIG. 6A, for example, at least partially or completely laterally and/or longitudinally overlaps the respective portion of the female forming tool clamping surface 208. At least one removable spacer plate 214 may be placed between the gripper plate 204 and the female forming tool 122. Additional spacer plates 214 may be added or removed depending on the thickness of the preform 110. The spacer plate(s) 214 may be located in the area of the threaded connection (i.e., fastener 216) to provide stability to the joint. In various embodiments, the fastener 216 extends through the spacer plate(s) 214.

In various embodiments, and with reference to FIG. 6B, grip surface 210 of one or more gripper plates 204 may also include one or more protrusions 212 for penetrating into the fibrous preform 110. The protrusions 212 may thereby lock a portion of the fibrous preform 110 in place; e.g., constrain movement of the respective engaged preform portion.

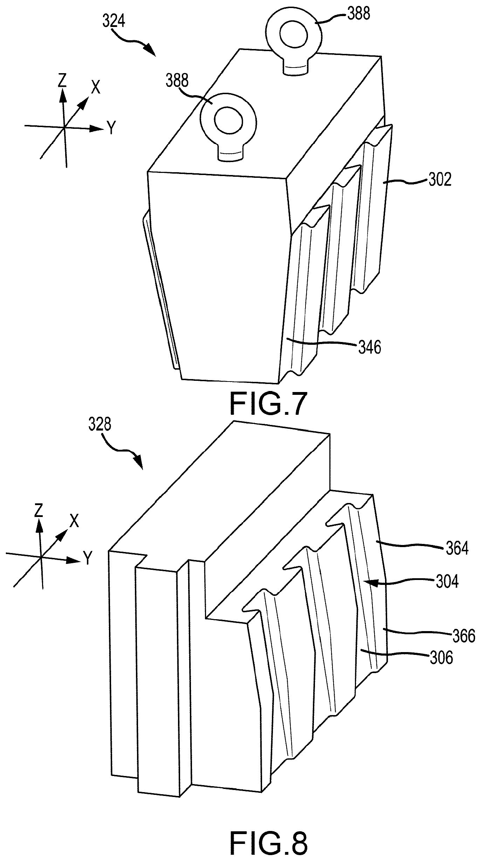

With reference to FIG. 7, a wedge 324 is illustrated, in accordance with various embodiments. Wedge 324 may be similar to wedge 124 (see FIG. 2) except that wedge 324 comprises vertically oriented guide flanges 302. With additional reference to FIG. 8, a second plug 328 is illustrated, in accordance with various embodiments. Second plug 328 may be similar to second plug 128 (see FIG. 3) except that second plug 328 comprises vertically oriented guide slots 304. In various embodiments, wedge 324 comprises one or more vertically oriented guide flanges 302 and second plug 328 comprises one or more vertically oriented guide slots 304. Each guide flange 302 is shaped and sized to be received by a respective guide slot 304. Each guide flange 302 may protrude from the angled surface 346. In this manner, wedge 324 may be mechanically locked from longitudinal movement (e.g., along the X-direction) with respect to second plug 328. Stated differently, the guide slot 304 is configured to receive the guide flange 302 for maintaining a longitudinal position of the second plug 328 with respect to the wedge 324.

In various embodiments, guide flanges 302 may comprise a tapered geometry such that the guide flange 302 becomes wider as it extends further from the second angled surface 346. Guide flange 302 (and guide slot 304) may be shaped like a dovetail. In this manner, wedge 324 may be mechanically locked from lateral movement (e.g., along the Y-direction) with respect to the second plug 328. Moreover, the guide flanges 302 and guide slots 304 provide rotational alignment (e.g., about the X-axis) of the second plug 328 with respect to wedge 324 (i.e., to keep the plug(s) from tipping over and rotating either clockwise (for the RH plug) or counterclockwise (for the LH plug). However, guide flanges 302 may be non-tapered or may be tapered such that the guide flange 302 becomes narrower as it extends further from the second angled surface 346, such that the wedge 324 is free-as to the guide flange 302-to move laterally away from the second plug 328.

Guide slot 304 may extend across the angled surface 364 and the vertical surface 366. The back surface 306 of the guide slot 304 may be a linear surface along the direction of travel of the guide flanges 302 with respect to the second plug 328.

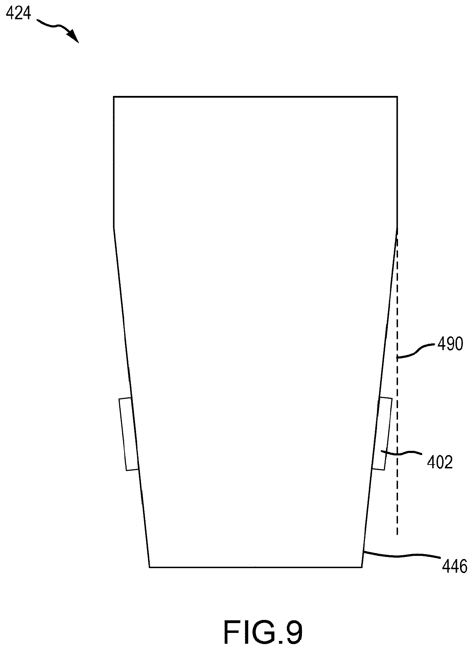

With reference to FIG. 9, a guide flange 402 for a wedge 424 is illustrated, in accordance with various embodiments. Guide flange 402 may be positioned, sized, and shaped so as to not extend laterally beyond the laterally outermost surface (e.g., vertical surface 150) of the wedge 424. FIG. 9 illustrates the laterally outermost boundary 490 with a dashed line and the guide flange 402 within said boundary. In this manner, the likelihood of the wedge 424 being snagged by the guide flange 402 as it is installed between the first plug and second plug is reduced. Stated differently, the likelihood of the guide flange 402 undesirably contacting the first plug or second plug during installation or disassembly is reduced.

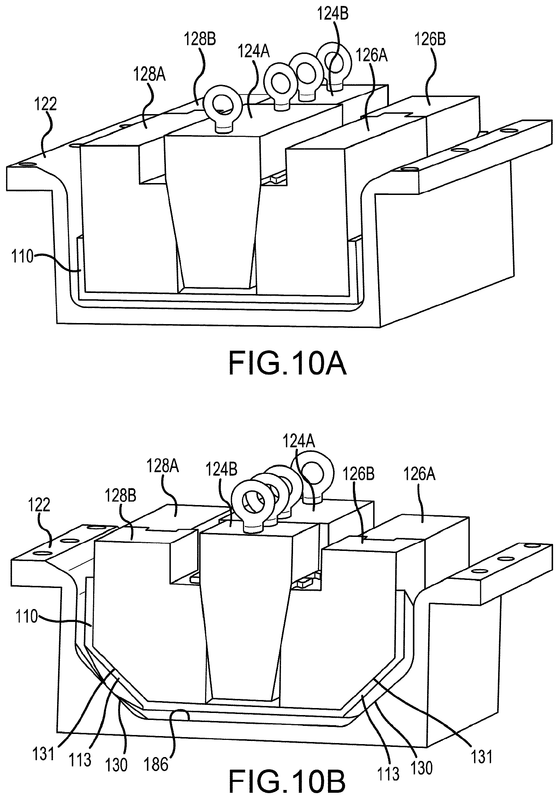

With reference to FIG. 10A and FIG. 10B, the wedge 124, first plug 126, and/or second plug 128 may be arranged in one or more arrays longitudinally disposed adjacent from each neighboring wedge 124, first plug 126, and/or second plug 128, respectively, in the same array. For example, the wedge (referred to generally as wedge 124) may comprise a first wedge sub-unit 124A and a second wedge sub-unit 124B. The first plug (referred to generally as first plug 126) may comprise a first plug sub-unit 126A and a second plug sub-unit 126B. The second plug (referred to generally as second plug 128) may comprise a third plug sub-unit 128A and a fourth plug sub-unit 128B. In various embodiments, the sub-units of an array (e.g., wedge sub-units, first plug sub-units, and/or second plug sub-units) may be interlocked with one another using tongue and groove joints, or the like, to maintain alignment of adjacent sub-units and even compression along the longitudinal length of the fibrous preform 110. In various embodiments, each sub-unit may comprise a different geometry to conform to the geometry of the female forming tool 122. Moreover, by providing a plurality of sub-units, each sub-unit may be separately installed, which may increase ease of installation for longitudinally lengthy arrays (as opposed to installing a single, more lengthy unit).

In various embodiments, female forming tool 122 may comprise one or more lifted corners 130 at least partially defining the recess surface 186. The lifted corner 130 may extend from a sidewall of the female forming tool 122 to a bottom wall of the female forming tool 122. One or more of the first plug 126 and/or the second plug 128 may comprise a corresponding cutout or beveled corner 131 shaped to be complementary to the lifted corner 130. In this manner, the fibrous OPF preform 110 may be formed to have a similarly shaped contour or lifted corner 113.

With reference to FIG. 7, a flow diagram of a method 500 for forming a fibrous OPF preform 110 into a shaped body is provided, in accordance with various embodiments. For ease of description, the method 500 is described below with reference to FIG. 1A, FIG. 1B, FIG. 5, FIG. 6A, and FIG. 6B. The method 500 of the present disclosure, however, is not limited to use of the exemplary shape forming tool 120 of FIG. 1A, FIG. 1B, FIG. 5, FIG. 6A, and FIG. 6B.

In step 502, the fibrous preform 110 is provided. Fibrous preform 110 may be configured as a multi-layered preform. The preform 110 of FIG. 6A and FIG. 6B, for example, includes a stack 114 of a plurality of layers of material 111A-C (generally referred to as "111"). This stack 114 includes the top layer of material 111A at / forming a top side of the fibrous preform 110 and the bottom layer of material 111B at / forming a bottom side of the fibrous preform 110. The stack 114 may also include at least one (or more) intermediate layer of material 111C vertically between the top layer of material 111A and the bottom layer of material 111B.

Each layer of material 111 may share a common (e.g., the same) construction and/or material makeup. Each layer of material 111 in the stack 114, for example, may be formed by a sheet / layer of fibrous material; e.g., non-woven oxidized polyacrylonitrile (PAN) fibers. However, one or more layers of dissimilar construction may also be included (e.g., a non-woven with a chopped fiber mat sacrificial material).

In step 504, the fibrous preform 110 is arranged with the female forming tool 122. The fibrous preform 110 is disposed on the female forming tool 122 at its top side 180 (see FIG. 5). The bottom layer of material 111B may engage (e.g., vertically contacts, is abutted against, lays flush on, etc.) the female forming tool top surfaces 184. In various embodiments, heat is added to the fibrous preform 110 during the shape forming process. For example, tool 120 may be heated whereby heat is conducted from the tool 120 into the fibrous preform 110. In various embodiments, it is further contemplated that heaters, separate from the tool 120, may be provided for heating the fibrous preform 110 during the shape-forming process. In various embodiments, components of the shape forming tool 120 may be heated in an oven prior to being introduced to the fibrous preform 110, for example to a shape forming temperature of between 150°F and 400°F (65°C - 205°C) in various embodiments, between 200°F and 350°F (93°C - 177°C) in various embodiments, between 200°F and 300°F (93°C - 149°C) in various embodiments, and between 225°F and 275°F (107°C - 135°C) in various embodiments.

In various embodiments, moisture is added to the fibrous preform 110 during the shape-forming process. For example, a sizing agent comprising a fluid and/or fluid vapor such as water, steam, and/or polyvinyl alcohol may be applied to the fibrous preform 110 (e.g., before being shape formed). Adding the sizing agent to the fibrous preform 110 may dampen the fibers thereof which tends to relax the fibers of the fibrous preform thereby aiding in the bending, forming, and/or stretching of the fibrous preform. Adding the sizing agent to the fibrous preform 110 may tend to reduce wrinkling of the fibrous preform 110. Sizing may help to protect the fiber from handling damage and provide lubricity allowing the fibers to slide easily during preforming/compaction and aid in preventing wrinkling and kinking. Sizing agents of the present disclosure include water soluble polymers. The sizing agent may comprise a water solution. The sizing agent and may comprise long chain alcohols such as polyvinyl alcohols, modified starch, cellulose gum such as carboxymethyl cellulose, modified wax, acrylates, and/or mixtures thereof. In various embodiments, up to about 700 mL (23.7 fluid oz) of water or more may be applied to the fibrous preform 110, though the amount of water is a variable parameter based on a variety of factors, including the size and volume of the fibrous preform 110. In various embodiments, approximately 1 milliliter (ml) of water may be added for every 2.5 cubic inches of fibrous preform (1ml / 2.5in³), wherein the term approximately as used in this context can only mean ±0.5ml. Stated differently, between 0.5ml and 1.5ml of water may be added to the fibrous preform for every 2.5 cubic inches of fibrous preform. However, it should be understood that other amounts of water or sizing agent may be added to the fibrous preform without departing from the scope of the present disclosure. Moreover, the fibrous preform may be preconditioned in a humidity chamber at a humidifying temperature (e.g., between 100°F (37.8°C) and 200°F (93.3°C)) and a relative humidity (e.g., between 75% and 90% humidity). Adding the sizing agent to the fibrous preform 110 may tend to reduce wrinkling of the fibrous preform 110 and support stabilizing the preform into the desired shape. In this manner, the fibrous preform 110 may be compressed to higher fiber volume ratio and formed to shape using heat, moisture, and pressure into contoured shapes using tool 120 as desired for a particular C/C part application.

The fibrous preform 110 may be pushed down (in the negative Z-direction) to the bottom of the recess surface 186 of the female forming tool 122 (see FIG. 6A) (e.g., by hand, using wedge 124, or the like). The bottom layer of material 111B may engage (e.g., vertically contacts, is abutted against, lays flush on, etc.) the female forming tool clamping surfaces 208. The top layer of material 111A may be disposed next to and under the gripper plates 204. The gripper plates 204 of FIG. 6A, for example, are disposed along a periphery of the fibrous preform 110 and its stack 114. More particularly, each of the gripper plates 204 of FIG. 6A (see also FIG. 6B) longitudinally and laterally overlaps the fibrous preform 110 and its stack 114 along opposing sides of the periphery.

In the arrangement of FIG. 5, the fibrous preform 110 and its stack 114 of the layers of material 111 may have a planar configuration. Prior to forming the shaped body 116, for example, the fibrous preform 110 and its stack 114 of the layers of material 111 may be configured as a flat plate. Of course, in other embodiments, one or more of the layers of material 111 in the stack 114 may slightly bend (e.g., droop) into the die recess 182.

In step 506, the fibrous preform 110 is formed into the shaped body 116. During this formation step 506, wedge 124, first plug 126, and second plug 128 may move (e.g., downward) vertically from the (e.g., open) position of FIG. 5 to the (e.g., closed) position of FIG. 1B. In various embodiments, the first plug 126 and second plug 128 are moved downward to rest on the fibrous preform and the wedge 124 is then moved downward to fit between the first plug 126 and second plug 128. As the first plug 126 and second plug 128 move (e.g., simultaneously or each individually), the first plug 126 and second plug 128 vertically engage a portion of the fibrous preform 110 and its stack 114 that overlaps (e.g., spans laterally and longitudinally across) the die recess 182. More particularly, the bottom side 160 vertically presses against the top layer of material 111A. With the wedge 124, first plug 126, and second plug 128 installed over the fibrous preform and at least partially within the die recess 182 (e.g., see FIG. 1A), the wedge 124 may be further moved (e.g., downward) vertically with respect to the female forming tool 122. Wedge 124 may be moved vertically using an apparatus 115, such as a dead weight, a press (e.g., mechanical, pneumatic, hydraulic, heated platen, etc.), or the like. As the wedge 124 continues to vertically move to its (e.g., closed) position of FIG. 1B, the wedge transmits a preform compressing force 192 into the first plug 126 and the second plug 128. For example, with particular focus on the second plug, preform compressing force 192 is transmitted via first angled surface 144 of wedge 124 and angled surface 164 of second plug 128, thereby causing the second plug 128 to move in the lateral direction (e.g., along the Y-axis) to compress (e.g., see compression forces represented by arrows 194 in FIG. 1A) a sidewall 118 of the fibrous preform 110 and also causing the second plug 128 to move (e.g., downward) in the vertical direction (e.g., along the Z-axis) to compress (e.g., see compression forces represented by arrows 196 in FIG. 1A) a bottom wall 117 of the fibrous preform 110. Although described with respect to second plug 128, it should be understood that wedge 124 similarly engages first plug 126 (e.g., with similar forces mirrored about the Z-axis). As the wedge 124 continues to vertically move to its (e.g., closed) position of FIG. 1B, the first plug 126 and second plug 128 (and in various embodiments the wedge 124) collectively reshape the stack 114 of the layers of material 111 to conform to (e.g., take the shape of) the recess surface 186. The fibrous preform 110 and its stack 114 of the layers of material 111, more particularly, are press formed (e.g., stamped) into the shaped body 116 between the wedge 124, first plug 126, second plug 128 and the recess surface 186 of female forming tool 122. Stated differently, pressing wedge 124 between and against the first plug and the second plug in a first direction (e.g., the negative Z-direction) causes the first plug 126 and the second plug to move in a second direction (e.g., along the Y-axis) substantially perpendicular to the first direction.

As the wedge 124 continues to vertically move to its (e.g., closed) position of FIG. 1B, the top side 142 may eventually become flush with the top sides of first plug 126 and second plug 128. When the top side 142 is flush with the top sides of first plug 126 and second plug 128, the apparatus 115 may contact to top sides of first plug 126 and second plug 128 (in addition to the top side 142 of wedge 124) and simultaneously move all three of wedge 124, first plug 126, and second plug 128. In this manner, the bottom sides of all three of wedge 124, first plug 126, and second plug 128 may be simultaneously pressed against the top layer of material 111A of the fibrous preform 110, thereby shaping and compressing the fibrous preform into the shaped body 116. In this regard, total vertical dimensions (e.g., a height; i.e., along the Z-axis) of the wedge 124, the first plug 126, and the second plug 128 may be the same. In various embodiments, three discrete apparatus may be provided to press each of wedge 124, first plug 126, and second plug 128, respectively.

Moreover, as the wedge 124 continues to vertically move to its (e.g., closed) position, the first plug 126 and the second plug 128 may be moved laterally outward (see FIG. 1B) to accommodate the increasing width of the wedge 124, thereby compressing and shaping the sidewalls 118 of the fibrous preform into the shaped body 116.

During the pressing, the gripper plates 204 may selectively grip the fibrous preform 110 and its stack 114 of the layers of material 111. Each gripper plate 204 and its grip surface 210 of FIG. 6A, for example, engage (e.g., contact, press against) the top layer of material 111A, which may clamp the stack 114 of the layers of material 111 vertically between the respective gripper plate 204 and its grip surface 210 and the female forming tool 122 and its female forming tool clamping surface 208. The relatively low coefficient of friction of the respective female forming tool clamping surface 208 may facilitate sliding of the bottom layer of material 111B (and in some cases the intermediate layer(s) of material 111C) along the female forming tool 122. The relatively high coefficient of friction of the grip surface 210, on the other hand, may anchor (or slow sliding of) the top layer of material 111A against the gripper plate 204 and its grip surface 210. The gripper plates 204 may thereby facilitate differential movement (e.g., sliding, pulling, etc.) between the layers of material 111 in the stack 114, which may reduce bunching, kinking and/or other deformation of the stack 114 of the layers of material 111 during the forming of the shaped body 116.

The differential movement between the layers of material 111 in the stack 114 may be tuned by individually activating and deactivating the gripper plates 204 depending on the specific configuration of the die recess 182, the contact surfaces of the first plug 126, second plug 128, and/or wedge 124 and/or material properties of the fibrous preform 110 and its stack 114.

In various embodiments, each of the gripper plates 204 may move along a single axis; e.g., vertically up and down. In other embodiments, one or more or all of the gripper plates 204 may each move along multiple axes; e.g., vertically up and down, horizontally side to side, and/or horizontally in and out, etc. One or more of all of the gripper plates 204 may also or alternatively each rotate about one or more axes; e.g., the X-axis, the Y-axis and/or the Z-axis.

In various embodiments, with the wedge 124 in the closed position, the shape forming tool 120 and shaped body 116 may be heated to the shape forming temperature (e.g., loaded into an oven) for a predetermined duration (e.g., between an hour and 24 hours in various embodiments). Dead weight (e.g., apparatus 115) may be applied to the top sides of the wedge 124 (or in various embodiments, the wedge 124, first plug 126, and second plug 128) while the compressed assembly is in the oven so that the wedge 124, first plug 126, and second plug 128 are biased toward the female forming tool 122 as the shaped body 116 compresses and/or shrinks over time. In this manner, the wedge 124, first plug 126, and second plug 128 continually apply a compressing force to the shaped body 116.

In various embodiments, the heating and load application may occur at the same time by loading the assembly into a heated platen press and allowing the action of the press to drive the wedge 124 into the closed position while the assembly is simultaneously being heated.

In step 508, the shaped body 116 is released from the shape forming tool 120 and moved to a graphite fixture. The wedge 124, first plug 126, and second plug 128, for example, are moved vertically away from the female forming tool 122. The wedge 124, first plug 126, and second plug 128 may be moved vertically away from the female forming tool 122 using a lifting apparatus coupled to the respective wedge 124, first plug 126, or second plug 128. For example, with momentary reference to FIG. 7, one or more lifting apparatus 388, for example an eye bolt, a hook, or the like, may be coupled to wedge 324. While shown installed onto wedge 324, it should be understood that the lifting apparatus 388 may similarly be installed onto either of the first plug 126 and/or the second plug 128. Lifting apparatus 388 may be removably coupled to the wedge 324. For example, with momentary reference to FIG. 2, wedge 124 is shown with threaded apertures 188 for receiving lifting apparatus 388 (see FIG. 7). As a further example, with momentary reference to FIG. 3, second plug 128 is shown with threaded apertures 189 for receiving lifting apparatus 388 (see FIG. 7). In this manner, the wedge 124, first plug 126, and/or second plug 128 may be moved via the lifting apparatus 388 by a mover, such as with a pulley, a crane, or the like. A single lifting fixture may be used to move wedge 124, first plug 126, and second plug 128 simultaneously, in various embodiments. Straps may be disposed between the lifting apparatus 388 and the lifting fixture, allowing said components to be lifted via the lifting fixture. The gripper plates 204 are similarly deactivated (if not done so already during the forming). The shaped body 116 may thereby be removed from the die recess 182 for further processing.

Shape forming tool 120 may form the fibrous preform 110 into the shaped body 116 comprising a final, or near final, shape of the desired C/C part. In various embodiments, the shaped body 116 comprises a U-shape cross-sectional geometry (e.g., in the Y-Z plane). In various embodiments, the shaped body 116 comprises a complex curvature, depending on the geometry of the recess surface 186 of the female forming tool 122. With reference to FIG. 1B, shaped body 116 including a sidewall 118 bent at an angle α with respect to a bottom wall 117 is illustrated, in accordance with various embodiments. In various embodiments, angle α is between one degree and one hundred and seventy-nine degrees (1°-179°), between thirty degrees and one hundred and seventy degrees (30°-170°), between thirty degrees and one hundred and twenty degrees (30°-120°), between forty-five degrees and one hundred and seventy degrees (45°-170°), between sixty degrees and one hundred and seventy degrees (60°-170°), between ninety degrees and one hundred and seventy degrees (90°-170°), between thirty degrees and one hundred and seventy degrees (30°-170°), between eighty degrees and one hundred degrees (80°-100°), or about ninety degrees (90°). The angle α is generally chosen based on the shape of the desired C/C part.

The shape forming tool 120 and its components 122, 124, 126, 128 are described above using the terms "bottom" and "top" with reference to exemplary orientations in the drawings. The present disclosure, however, is not limited to any particular formation system orientations. For example, in other embodiments, the wedge 124, first plug 126, and second plug 128 may alternatively be configured as a bottom die and the female forming tool 122 may alternatively be configured as a top die.

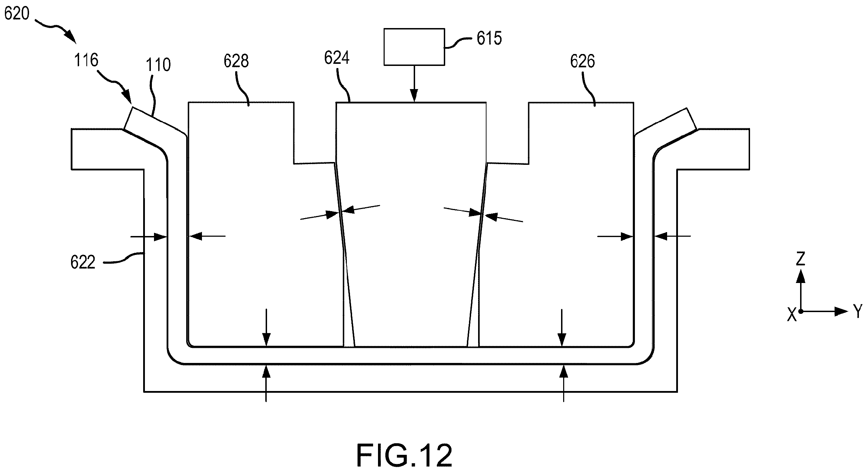

After being shape-formed using the shape forming tool 120, the shaped body 116 may be moved from the metallic shape forming tool 120 to a similarly shaped graphite fixture which is configured to maintain the compressed shape of the shaped body 116 during a subsequent carbonization process. The components of the graphite fixture 620 may be made from a graphite material suitable for withstanding carbonization and/or densification temperatures. With reference to FIG. 12, shaped body 116 is illustrated loaded into a graphite fixture 620 comprising a graphite wedge 624, a graphite first plug 626, a graphite second plug 628, and a graphite female die 622. The graphite wedge 624, graphite first plug 626, graphite second plug 628, and graphite female die 622 may be structurally and/or functionally similar wedge 124, first plug 126, second plug 128, and female forming tool 122 of FIG. 1A through FIG. 10B. The graphite wedge 624, graphite first plug 626, graphite second plug 628, and graphite female die 622 may be structurally and/or functionally similar wedge 824, first plug 826, second plug 828, and female forming tool 822 of FIG. 14.

Graphite fixture 620 may comprise contoured surfaces similar to those of the shape forming tool 120. In this manner, graphite fixture 620 is configured to maintain the shape of the shaped body 116 previously achieved using the shape forming tool 120. Graphite fixture 230 may be configured to further compress the shape-formed fibrous preform 110 beyond that which might typically be achieved without compression. In various embodiments, graphite fixture 620 comprises a first member 232 and a second member 234. Shaped body 116 may be held in compression by placing a dead weight 615 onto graphite wedge 624 to evenly apply compressive forces onto shaped body with graphite wedge 624, graphite first plug 626, and/or graphite second plug 628, generally as described with respect to FIG. 1A and FIG. 1B. In this manner, gravitational forces and the dead weight may hold shaped body 116 in compression between graphite wedge 624, graphite first plug 626, and/or graphite second plug 628 and graphite female die 622. Moreover, externally applied hydraulic compression forces may be used to hold shape-formed fibrous preform 110 in compression in graphite fixture 620. Moreover, because graphite wedge 624, graphite first plug 626, and graphite second plug 628 are non-rigidly coupled to and graphite female die 622 and gravitational forces pull graphite wedge 624, graphite first plug 626, and graphite second plug 628 toward graphite female die 622 (i.e., in the negative Z-direction in FIG. 12), the graphite fixture 620 is configured to accommodate shrinkage and further compression of shaped body 116 during carbonization. In this regard, as shaped body 116 shrinks during carbonization, the gap between graphite wedge 624, graphite first plug 626, or graphite second plug 628 and graphite female die 622 may decrease due to the dead weight 615 biasing graphite wedge 624 toward graphite female die 622. In this manner, the shape of shaped body 116 is maintained and the shrinkage of the shaped body 116 is accommodated. In various embodiments, graphite wedge 624, graphite first plug 626, and graphite second plug 628 are not in direct contact with graphite female die 622. Stops may also be used during the carbonization process to control the carbonized preform thickness and fiber volume to the target level.

In various embodiments, the graphite fixture 620 is designed such that the wedge 624 sits up (i.e., proud of or protruding above the plugs 626, 628) at the beginning of carbonization. During carbonization, the fibrous preform 110 will shrink (e.g., decrease in thickness). As this shrinkage is occurring, the influence of the dead weight 615 on the wedge 624 will drive the wedge(s) 624 and plugs 626, 628 down and out (laterally toward the female forming tool sidewalls) to continue to apply pressure to the fibrous preform 110.

In step 510, and with the shaped body 116 secured in compression within graphite fixture 620, the shaped body 116 may be carbonized to maintain shape and decrease fiber volume. In various embodiments, shaped body 116 together with graphite fixture 620 may be placed in a furnace for carbonization. The carbonization process may be employed to convert the fibers of the shaped body 116 into pure carbon fibers, as used herein only "pure carbon fibers" means carbon fibers comprised of at least 99% carbon. The carbonization process is distinguished from the densification process described below in that the densification process involves infiltrating the pores of the shaped body 116 and depositing a carbon matrix within and around the carbon fibers of the shaped body 116, and the carbonization process refers to the process of converting the fibers of the fibrous preform 110 into pure carbon fibers.

The shape-formed fibrous preform 110 may be carbonized by placing the shape-formed fibrous preform 110 in a furnace with an inert atmosphere. In general, the carbonization process involves heating the shape-formed fibrous preform 110 in a furnace to a temperature greater than about 1,600 degrees Celsius (2912 Fahrenheit). Typically, an inert atmosphere of nitrogen, argon or a vacuum is provided in the furnace during the carbonization process. The heat of the furnace causes a chemical conversion of the OPF that converts the fibers to carbon fibers and drives off other chemicals. Although it is sometimes preferred that the fibers in the carbonized fiber preform be 100% carbon fiber, it is generally acceptable for a less than full conversion to take place. The resulting carbonized fiber preform generally has the same fibrous structure as the fibrous preform before carbonizing. During carbonization, the total mass and the total fiber volume in each fibrous preform is typically reduced due to the loss of non-carbon compounds.

Fiber density of the fibrous preform 110 may increase during carbonization (e.g., from about 1.37 g/cc in OPF state to about 1.77-1.85 g/cc after carbonization, depending on the final carbonization temperature). In various embodiments, the OPF fibers shrink during carbonization, as OPF may have a char/carbon yield of around 50%. As used herein "char/carbon yield" means the remaining mass of the OPF after degrading the OPF using the carbonization process.

After carbonization, the carbonized shaped body 116 may be densified using chemical vapor infiltration (CVI), as described in further detail below. After carbonization, shaped body 116 may be densified. In various embodiments, the shaped body 116 is removed from graphite fixture 620 prior to densification. In various embodiments, the shaped body 116 is placed in a perforated graphite fixture during one or more densification runs. The shaped body 116 may be densified with pyrolytic carbon by CVI using optimized process conditions to maintain shape and support efficient carbon densification. In general, densification involves filling the voids, or pores, of the fibrous preform with additional carbon material. This may be done using the same furnace used for carbonization or a different furnace. Typically, chemical vapor infiltration and deposition ("CVI/CVD") techniques are used to densify the porous fibrous preform with a carbon matrix. This commonly involves heating the furnace and the carbonized preforms, and flowing hydrocarbon gases (e.g., at least one of methane, ethane, propane, butane, and/or the like, as described herein) into the furnace and around and through the fibrous preforms. In various embodiments, the CVI/CVD process may include a temperature gradient. In various embodiments, the CVI/CVD process may include a pressure gradient. In various embodiments, the CVI/CVD process may include a temperature and a pressure gradient.

CVI/CVD densification may be conducted in a vacuum or partial vacuum (e.g., at pressures of 1-15 torr) or in an inert atmosphere at a temperature in the range from about 900°C to about 1100°C (1,652°F to about 2,012°F), and in various embodiments in the range of up to about 1,000°C (1,832°F) (wherein the term about in this context only means +/- 100°C) for a period of time in the range from about 150 hours to about 650 hours, and in various embodiments, in the range from about 300 hours to about 500 hours (wherein the term about in this context only means +/- 24 hours).

As a result, carbon from the hydrocarbon gases separates from the gases and is deposited on and within the fibrous preforms. Typically, the densification process is continued until the preform reaches a density in the range from 1.6 to 1.9 grams per cubic centimeter (g/cc), and in various embodiments, a density of approximately 1.80 g/cc. When the densification step is completed, the resulting C/C part has a carbon fiber structure with a carbon matrix infiltrating the fiber structure, thereby deriving the name "carbon/carbon."

After a first CVI/CVD cycle of 300 to 500 hours, an intermediate heat treat is typically performed, in the same furnace. This heat treat (>1600°C) serves to dimensionally stabilize the shaped body 116, increase its thermal properties, and increase its porosity for subsequent densification. The shaped body 116 may then be machined to open the porosity further, to help allow for final density to be achieved using only one more CVI/CVD cycle. Part densities after first machining may be in the range of 1.4 to 1.7 g/cc, depending on the part thickness, overall size, and placement within the furnace. Typical, average density range is 1.55-1.65 g/cc.

The densification process may be continued until the preform reaches a desired density, for example in the range from 1.7 to 1.9 grams per cubic centimeter (g/cc), and in various embodiments, a density of approximately 1.80 g/cc. The CVI/CVD process may be continued with the shaped body 116 removed from the perforated graphite fixture. In this manner, the outer surfaces of the shaped body 116 may be more directly exposed to the gas flow. Moreover, the shaped body 116 may be machined in between carbon CVI densification processes (e.g., between fixtured carbon CVI densification and non-fixtured carbon CVI densification and/or between successive non-fixtured carbon CVI densification processes). Machining (e.g., grinding, sanding, milling, grit blasting, etc.) the shaped body 116 may be performed to achieve a final desired part shape. Machining the shaped body 116 may be performed to expose voids, or pores, of the shaped body 116 so as to facilitate infiltration with additional carbon material during subsequent carbon CVI densification. When the densification step is completed, and the desired density is achieved, the resulting C/C part has a carbon fiber structure with a carbon matrix infiltrating the fiber structure, thereby deriving the name "carbon/carbon."

Following the CVI/CVD densification process, the C/C part may undergo a final heat treatment (FHT) process. This may be done using the same furnace used for densification or a different furnace. If done using the same furnace, the flow of hydrocarbon gases would be stopped following the end of the densification process and the temperature increased. FHT may be conducted in a vacuum or partial vacuum (e.g., at pressures of 1-15 torr) or in an inert atmosphere at a temperature in the range from about 1200°C to about 2600°C (2,921°F to about 4,712°F), and in various embodiments in the range from about 1400°C to about 2200°C (2,552°F to about 3,992°F) (wherein the term about in this context only means +/- 100°C) for a period of time in the range from about 4 hours to about 14 hours, and in various embodiments, in the range from about 8 hours to about 12 hours (wherein the term about in this context only means +/- 2 hours). In various embodiments, the FHT process imparts high temperature dimensional stability to the final C/C part. In various embodiments, the FHT process imparts desired thermal properties associated with thermal shock such as high thermal conductivity, high heat capacity, and/or high emissivity.

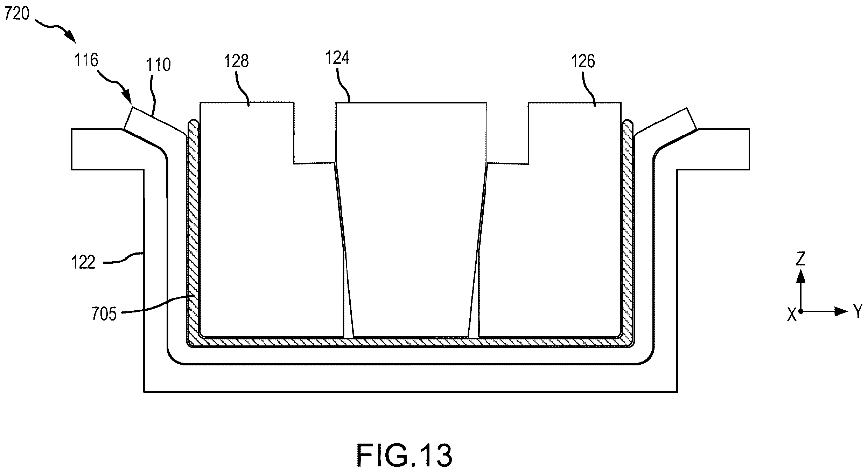

With respect to FIG. 13, elements with like element numbering, as depicted in FIG. 1A, are intended to be the same and will not necessarily be repeated for the sake of clarity.

With reference to FIG. 13, a shape forming tool 720 is illustrated, in accordance with various embodiments. Shape forming tool 720 may be similar to shape forming tool 120 of FIG. 1A, except that shape forming tool 720 further includes a caul plate 705 disposed between the male dies (i.e., wedge 124, first plug 126, and second plug 128) and the fibrous preform 110. Caul plate 705 may be made from a rubber material. Caul plate 705 may be compressed between the male dies (i.e., wedge 124, first plug 126, and second plug 128) and the fibrous preform 110 during pre-carbonization compression. Caul plate 705 may conform to the fibrous preform 110 during the pre-carbonization compression. Caul plate 705 may be configured to mitigate ridges caused by the tooling surfaces (e.g., at an interface between wedge 124 and first plug 126 and/or between wedge 124 and second plug 128) during pre-carbonization compression using shape forming tool 720. In this manner, caul plate 705 may facilitate even distribution of forces from the male dies onto the fibrous preform 110.

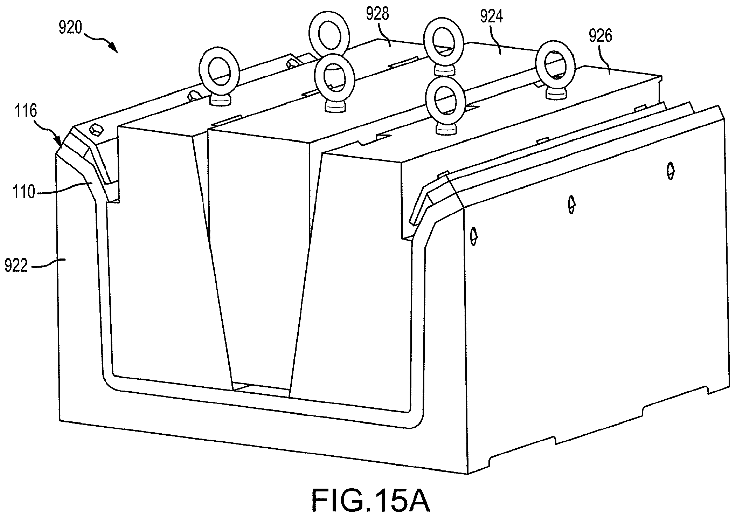

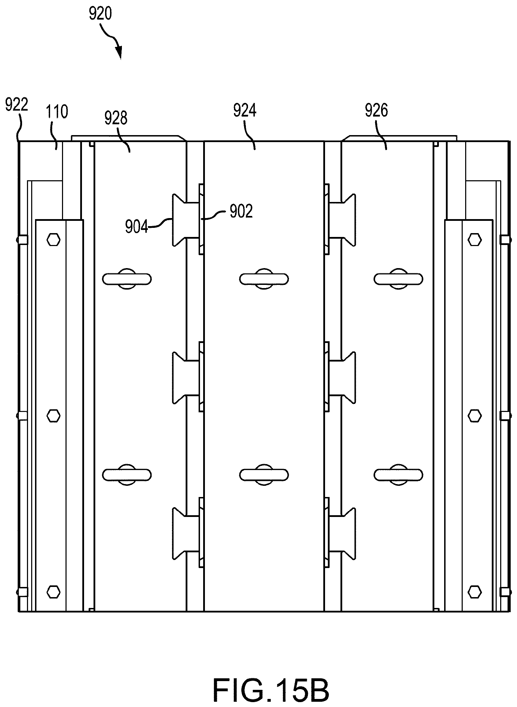

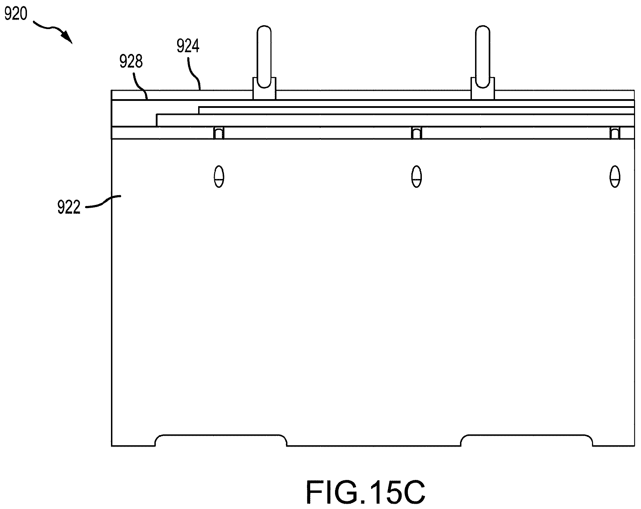

With respect to FIG. 15A through FIG. 15C, elements with like element numbering, as depicted in FIG. 1A, are intended to be the same and will not necessarily be repeated for the sake of clarity.

With reference to FIG. 15A through FIG. 15C, a shape forming tool 920 is illustrated, in accordance with various embodiments. Shape forming tool 920 includes a female forming tool 922, a wedge 924, a first plug 926, and a second plug 928. Female forming tool 922, wedge 924, first plug 926, and second plug 928 may be structurally similar to female forming tool 822, wedge 824, first plug 826, and second plug 828 as described with respect to FIG. 14.

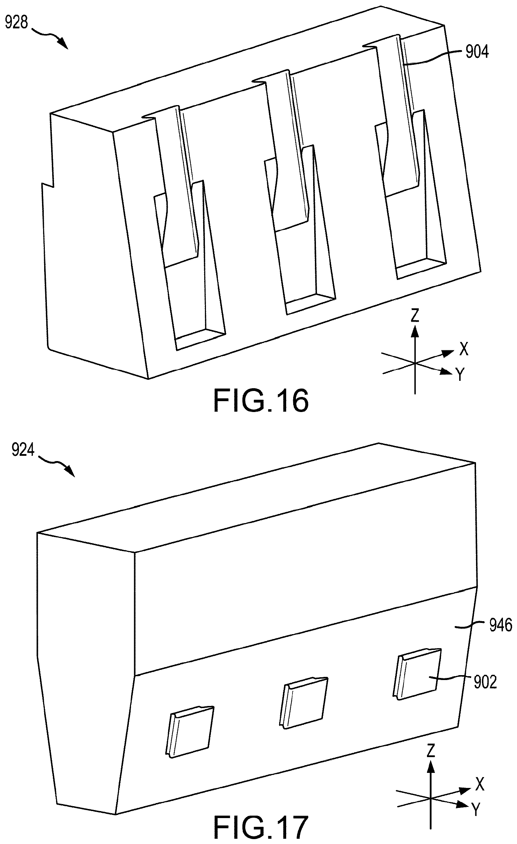

With additional reference to FIG. 16 and FIG. 17, wedge 924 comprises one or more guide flanges 902 and second plug 928 comprises one or more guide slots 904. Each guide flange 902 is shaped and sized to be received by a respective guide slot 904. Each guide flange 902 may protrude from angled surface 946. In this manner, wedge 924 may be mechanically locked from longitudinal movement (e.g., along the X-direction) with respect to second plug 928. Stated differently, the guide slot 904 is configured to receive the guide flange 902 for maintaining a longitudinal position of the second plug 928 with respect to the wedge 924. Moreover, the guide flange 902 and guide slot 904 provide rotational alignment (e.g., about the X-axis) of the second plug 928 with respect to wedge 924 (i.e., to keep the plug(s) from tipping over and rotating either clockwise (for the RH plug) or counterclockwise (for the LH plug) as viewed in FIG. 15A.

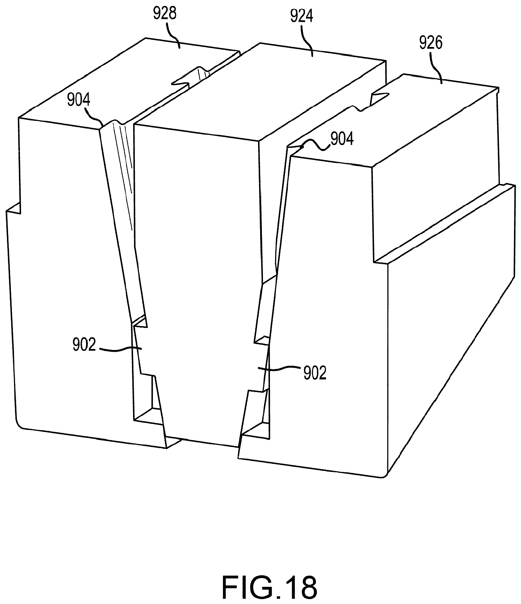

With reference to FIG. 18, a section view of the wedge 924, first plug 926, and second plug 928 are illustrated in an installed position. The female forming tool 922 is omitted in FIG. 18 for clarity purposes. In various embodiments, as the wedge 924 slides downward with respect to second plug 928 (and first plug 926), the guide flange 902 may slide past and out of the guide slot 904 to facilitate disassembly of the wedge 924 from first plug 926 and second plug 928.

Systems and methods are provided. In the detailed description herein, references to "various embodiments", "one embodiment", "an embodiment", "an example embodiment", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

Benefits, other advantages, and solutions to problems have been described herein with regard to specific embodiments. However, the benefits, advantages, solutions to problems, and any elements that may cause any benefit, advantage, or solution to occur or become more pronounced are not to be construed as critical, required, or essential features or elements of the invention. The scope of the invention is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C. Furthermore, no element, component, or method step in the present disclosure is intended to be dedicated to the public regardless of whether the element, component, or method step is explicitly recited in the claims. As used herein, the terms "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus.

## Claims

1. A shape forming tool, comprising:
a female forming tool (122, 922) comprising a die recess, the female forming tool (122, 922) extends longitudinally along a longitudinal centerline of the female forming tool (122, 922) between and to a first end of the female forming tool (122, 922) and a second end of the female forming tool (122, 922), and the female forming tool (122, 922) extends laterally between and to a first side of the female forming tool (122, 922) and a second side of the female forming tool (122, 922);
a first plug (126, 626) configured to be received by the die recess;
a second plug (128, 628) configured to be received by the die recess;
a wedge configured to be received by the die recess between the first plug (126, 626) and the second plug (128, 628), the wedge extends longitudinally along a longitudinal centerline of the wedge between and to a first end of the wedge and a second end of the wedge, the wedge extends laterally between and to a first side of the wedge and a second side of the wedge, the first side of the wedge comprises a first tapered surface and the second side of the wedge comprises a second tapered surface;
wherein the first tapered surface of the wedge is configured to engage the first plug (126, 626) and the second tapered surface of the wedge is configured to engage the second plug (128, 628);
in response to the first tapered surface of the wedge engaging the first plug (126, 626), the first plug (126, 626) is configured to move laterally toward the first side of the female forming tool (122, 922); and
in response to the second tapered surface of the wedge engaging the second plug (128, 628), the second plug (128, 628) is configured to move laterally toward the second side of the female forming tool (122, 922).

2. The shape forming tool of claim 1, wherein the female forming tool (122, 922) extends vertically between and to a bottom side of the female forming tool (122, 922) and a top side of the female forming tool (122, 922); and
wherein the die recess extends vertically into the female forming tool (122, 922) from a first top surface and a second top surface of the female forming tool (122, 922) to a recess surface of the female forming tool (122, 922), wherein the first top surface and the second top surface are arranged on opposing sides of the recess surface at the top side of the female forming tool (122, 922);
wherein the die recess extends longitudinally in the female forming tool (122, 922) between and to the first end of the female forming tool (122, 922) and the second end of the female forming tool (122, 922);
the die recess extends laterally in the female forming tool (122, 922) between the first side of the female forming tool (122, 922) and the second side of the female forming tool (122, 922); and
the die recess is configured without any sharp corners or sharp transitions.

3. The shape forming tool of claim 1 or 2, wherein the die recess extends into the female forming tool (122, 922) from a first top surface and a second top surface of the female forming tool (122, 922) to a recess surface of the female forming tool (122, 922), wherein the recess surface comprises a radii surface forming a rounded, convex surface transition disposed between a sidewall portion of the recess surface and the first top surface of the female forming tool (122, 922).

4. The shape forming tool of any preceding claim, further comprising a caul plate configured to be disposed between the fibrous preform and at least one of the wedge, the first plug (126, 626), and the second plug (128, 628), wherein the caul plate is configured to distribute a force between the at least one of the wedge, the first plug (126, 626), and the second plug (128, 628) and the fibrous preform during a pre-carbonization compression process.

5. The shape forming tool of any preceding claim, wherein the first plug (126, 626) comprises a first angled surface configured to engage the first tapered surface of the wedge, and the second plug (128, 628) comprises a second angled surface configured to engage the second tapered surface of the wedge, and optionally wherein the first tapered surface comprises a guide flange protruding therefrom, and the first angled surface comprises a guide slot configured to receive the guide flange for maintaining a longitudinal position and a rotational position of the first plug (126, 626) with respect to the wedge, and optionally wherein the guide flange is disposed entirely within a laterally outermost boundary of the wedge.

6. The shape forming tool of any preceding claim, wherein at least one of the wedge, the first plug (126, 626), or the second plug (128, 628) comprises a threaded aperture at top side thereof for receiving a lifting apparatus whereby at least one of the wedge, the first plug (126, 626), or the second plug (128, 628) is moved.

7. A shape forming tool, comprising:
a female forming tool (122, 922) comprising a die recess;
a first plug (126, 626) configured to be received by the die recess;
a second plug (128, 628) configured to be received by the die recess;
a wedge configured to be received by the die recess between the first plug (126, 626) and the second plug (128, 628), the wedge extends longitudinally along a longitudinal centerline of the wedge between and to a first end of the wedge and a second end of the wedge, the wedge extends laterally between and to a first side of the wedge and a second side of the wedge, the first side of the wedge comprises a first tapered surface and the second side of the wedge comprises a second tapered surface;
wherein the first tapered surface of the wedge is configured to engage the first plug (126, 626) and the second tapered surface of the wedge is configured to engage the second plug (128, 628);
in response to the first tapered surface of the wedge engaging the first plug (126, 626), the first plug (126, 626) is configured to move vertically toward a bottom side of the female forming tool (122, 922); and
in response to the second tapered surface of the wedge engaging the second plug (128, 628), the second plug (128, 628) is configured to move vertically toward the bottom side of the female forming tool (122, 922).

8. The shape forming tool of claim 7, wherein:
in response to the first tapered surface of the wedge engaging the first plug (126, 626), the first plug (126, 626) is configured to move laterally toward a first side of the female forming tool (122, 922); and
in response to the second tapered surface of the wedge engaging the second plug (128, 628), the second plug (128, 628) is configured to move laterally toward a second side of the female forming tool (122, 922), and optionally wherein a total height of the wedge, measured along a vertical direction, is equal to that of the first plug (126, 626) and the second plug (128, 628).

9. A method for manufacturing a C/C part, the method comprising:
positioning an oxidized PAN fiber preform with a female forming tool (122, 922), the female forming tool (122, 922) comprising a die recess;
forming the oxidized PAN fiber preform into a shaped body, the forming comprising:
moving a first plug (126, 626) at least partially into the die recess, the oxidized PAN fiber preform disposed between the first plug (126, 626) and the female forming tool (122, 922);
moving a second plug (128, 628) at least partially into the die recess, the oxidized PAN fiber preform disposed between the second plug (128, 628) and the female forming tool (122, 922);
moving a wedge between and against the first plug (126, 626) and the second plug (128, 628) along a first axis;
in response to the wedge pressing between and against the first plug (126, 626) and the second plug (128, 628), moving the first plug (126, 626) and the second plug (128, 628) along a second axis substantially perpendicular to the first axis;
in response to moving the first plug (126, 626) and the second plug (128, 628) along the second axis, compressing the oxidized PAN fiber preform between the first plug (126, 626) and the female forming tool (122, 922) and between the second plug (128, 628) and the female forming tool (122, 922).

10. The method of claim 9, wherein movement of the wedge along the first axis further causes the first plug (126, 626) and the second plug (128, 628) to move parallel to the first axis.

11. The method of claim 10, further comprising, in response to the wedge moving along the first axis, compressing the oxidized PAN fiber preform between the wedge and the female forming tool (122, 922), or wherein the first plug (126, 626) and the second plug (128, 628) are in direct contact with the oxidized PAN fiber preform when the wedge is pressed between and against the first plug (126, 626) and the second plug (128, 628).

12. The method of any of claims 9 to 11, further comprising gripping the oxidized PAN fiber preform with a gripper plate, wherein a lateral end of the oxidized PAN fiber preform is held between the gripper plate and a clamping surface of the female forming tool (122, 922), and optionally wherein a first layer of the oxidized PAN fiber preform is held by the gripper plate and a second layer of the oxidized PAN fiber preform is slidable against the clamping surface of the female forming tool (122, 922).

13. The method of any of claims 9 to 12, further comprising applying water to the oxidized PAN fiber preform prior to the oxidized PAN fiber preform being formed into the shaped body.

14. The method of any of claims 9 to 13, further comprising applying heat to the oxidized PAN fiber preform for a predetermined duration while the oxidized PAN fiber preform is held in compression in the die recess.

15. The method of any of claims 9 to 14, further comprising:
moving the shaped body into a graphite fixture;
performing a carbonization process on the shaped body; and
depositing carbon on and within the shaped body via a chemical vapor infiltration process while the shaped body is secured in the graphite fixture.
